# EUROPEAN PATENT SPECIFICATION

(11) **EP 2 796 036 B1**
(45) Date of publication and mention of the grant of the patent: **05.02.2020**
(21) Application number: 12859757.2
(22) Date of filing: 18.12.2012
(51) Int. Cl.: A01K 1/015, A01K 1/01

(54) **SHEET FOR PETS**
FOLIE FÜR HAUSTIERE
FEUILLE POUR ANIMAUX DOMESTIQUES

(30) Priority: 21.12.2011 JP 2011280502
(43) Date of publication of application: 29.10.2014
(73) Proprietor: Unicharm Corporation, Ehime 799-0111 (JP)
(72) Inventor: SASANO, Yasuhiro, Kanonji-shi, Kagawa 7691602 (JP); IKEGAMI, Takeshi, Kanonji-shi, Kagawa 7691602 (JP); KOMURO, Yumei, Kanonji-shi, Kagawa 7691602 (JP)
(74) Representative: Staeger & Sperling Partnerschaftsgesellschaft mbB
(86) International application number: PCT/JP2012/082799
(87) International publication number: WO 2013/094607

(56) References cited:
- EP-A1- 1 709 870
- WO-A1-2014/092030
- JP-A- 2005 198 597
- JP-A- 2008 136 377
- JP-A- 2009 118 791
- JP-A- 2011 205 973
- JP-U- H0 421 249
- US-A- 4 774 907

## Description

### BACKGROUND OF THE INVENTION

### Field of the Invention

The invention relates to a pet sheet for receiving excrement of pets such as dogs and cats.

### Description of the related Art

An example of a pet sheet is disclosed in Japanese laid-open Patent Publication No. 2009-118791. This known pet sheet has a top sheet, a back sheet and an absorbing core including absorbent polymer and arranged between these two sheets, and further has a covering sheet which covers the top of the absorbing core. The pet sheet can perform its original function when urine excreted from a pet reaches the absorbing core through the top sheet and the covering sheet and is absorbed and retained in the absorbing core.

In a pet sheet of this type, however, a sheet surface may be torn by claws or teeth of a pet and the covering sheet may also be torn. In such a case, the absorber may be partially uncovered and scattered.

JP 2009-118791 A is provided as a prior art reference. In addition more relevant prior art is known by WO 2014/092030 A1, US 4 774 907 A, JP 2011 205973 A and EP 1 709 870 A1.

### SUMMARY OF THE INVENTION

Accordingly, it is an object of the invention to provide an effective technique for preventing a covering sheet for covering an absorber in a pet sheet from being torn by a pet.

In order to solve the above-described problem, the invention as defined in claim 1 is provided.

A pet sheet according to this invention is provided and constructed to receive excrement of a pet and includes a top sheet, a back sheet, an absorber, a covering sheet and a tear preventing structure.

The top sheet has a nonwoven fabric forming region. In this case, the whole or part of the top sheet can be formed of nonwoven fabric. The back sheet is overlaid on the top sheet. The absorber is provided between the top sheet and the back sheet. The covering sheet has a thermoplastic nonwoven fabric (thermoplastic resin nonwoven fabric) forming region and is provided between the top sheet and the absorber to cover the absorber. In this case, the whole or part of the covering sheet can be formed of thermoplastic nonwoven fabric. The tear preventing structure is provided in the covering sheet to prevent the covering sheet from being torn by the pet. With such a construction, even if a pet scratches the top sheet with the claws or bites it with the teeth so that the top sheet is torn, the tear preventing structure can prevent the covering sheet from being torn. Therefore, covering of the absorber by the covering sheet is secured, so that scattering of the absorber can be prevented. Further, the covering sheet itself has a tear preventing structure, so that an additional member for preventing the covering sheet from being torn is not needed in addition to the covering sheet.

In a further embodiment of this invention, preferably, the tear preventing structure prevents the covering sheet from being torn by a sharp part of the pet when the sharp part moves relative to the covering sheet in contact with the top sheet. With this construction, the covering sheet can be prevented from being torn particularly by a sharp part of the pet. In this case, tearing of the covering sheet may be caused by relative movement of the sharp part of the pet with respect to the covering sheet in contact with the top sheet and not through the top sheet, or it may be caused by relative movement of the sharp part of the pet with respect to the covering sheet in contact with the top sheet and through the top sheet. The "sharp part" here refers to a sharp part with which a pet can tear the pet sheet, and typically corresponds to a claw or tooth of the pet. The "relative movement" here includes movement of the sharp part of the pet with respect to the covering sheet, and movement of the covering sheet with respect to the sharp part of the pet. Specifically, the covering sheet may be torn by various tearing actions of pets, such as scratching with the claws along an extending surface of the covering sheet, and digging of the claws or biting with the teeth in a direction transverse to the extending surface of the covering sheet.

Particularly unlike a "diaper" which is designed to be worn on an excreting part of the wearer and to receive excrement of the wearer, the pet sheet according to this embodiment is designed to receive excrement in non-contact with the excreting part. Therefore, this pet sheet is suitably applied to a sheet for receiving excrement in which the covering sheet has a risk of being torn by sharp parts of the pet.

In a further embodiment of this invention, preferably, the pet sheet has a pet use mode in which the pet sheet is unfolded flat and used. In the pet use mode, an outer surface of the top sheet has a planar structure serving both as an excrement receiving surface for receiving excrement of the pet in non-contact with the excreting part and as a pet walking surface on which the pet can walk.

Generally, when a pet like a dog excretes, the excreting part (from which urine is excreted) of the pet is held in non-contact with the top sheet. Further, in urinary excretion, the pet selects a desired spot on the top sheet, or avoids urinating on a spot which has been used once. At this time, in an area of the top sheet on which the pet frequently behaves actively, the top sheet may be torn particularly by contact of the pet's sharp part and the outer surface of the top sheet and thus the covering sheet may be torn. Therefore, in the pet use mode, even if the pet actively behaves on the top sheet during, before or after urination, the covering sheet can be prevented from being torn following the top sheet.

In a further embodiment of this invention, preferably, the tear preventing structure is constructed such that the covering sheet has a tear strength of 2 to 10 N. In this case, the "tear strength" is defined as resistance (also referred to as "tearing load") to tearing of the nonwoven fabric sheet and expressed in newton (N).

With this construction, particularly by provision of the covering sheet having a tear strength of 2 N or higher, even if the top sheet is torn, the covering sheet having a predetermined tear strength can protect the absorber. Further, in order to reduce the manufacturing cost, preferably, the upper limit of the tear strength of the covering sheet is set to 10 N.

According to the invention, the covering sheet includes meltblow nonwoven fabric. This covering sheet includes a covering sheet of a one-layer structure having only a meltblow nonwoven fabric sheet, and a multi-layer structure having one or more meltblow nonwoven fabric sheets and one or more other nonwoven fabric sheets in combination. By using relatively finely-woven meltblow nonwoven fabric for the covering sheet, absorbent polymers or other similar materials forming the absorber can be prevented from passing through the covering sheet 130.

According to the invention, the covering sheet has a three-layer structure having spun-bond nonwoven fabric sheets overlaid on both sides of the meltblow nonwoven fabric sheet. By providing the spun-bond nonwoven fabric sheet having a relatively long fiber length on the sheet surface, the surface roughness of the covering sheet can be reduced so that the nice and soft covering sheet can be obtained.

In a further embodiment of this invention, preferably, the covering sheet has a basis weight of 8 to 20 g/m². In this manner, the manufacturing cost of the covering sheet having a desired tear strength can be reduced. The "g/m²" here represents a gram per square meter which measures basis weight.

In a further embodiment of this invention, preferably, the top sheet is formed as a thermoplastic nonwoven fabric sheet having a basis weight of 10 to 30 g/m² and a tear strength of 2 to 10 N. In this manner, by providing the top sheet with a predetermine tear strength, the top sheet itself can be prevented from being torn before the covering sheet. Further, by providing the top sheet having a basis weight within the predetermined range, the manufacturing cost of the top sheet can be reduced.

In a further embodiment of this invention, preferably, the top sheet and the covering sheet are bonded together via a bonding layer and form a bonded sheet such that the bonded sheet includes the tear preventing structure. The whole bonded sheet which is integrally formed by the top sheet and the covering sheet can counteract tearing actions of pets.

In a further embodiment of this invention, preferably, the top sheet comprises a thermoplastic nonwoven fabric sheet having a basis weight of 10 to 30 g/m² and a tear strength of 2 to 10 N, the covering sheet comprises a nonwoven fabric sheet which has a three-layer structure having spun-bond nonwoven fabric sheets overlaid on both sides of the meltblow nonwoven fabric sheet and has a basis weight of 8 to 20 g/m², and the bonded sheet has a tear strength of 4 to 20 N. With this construction, the whole bonded sheet having a predetermined tear strength can counteract tearing actions of pets.

### [Effect of the Invention]

As described above, according to this invention, a pet sheet is provided in which a covering sheet for covering an absorber can be prevented from being torn by a pet.

### BRIEF DESCRIPTION OF THE DRAWINGS

FIG. 1 is a perspective view showing an upper surface of a pet sheet 100 according to an embodiment of the invention.
FIG. 2 is an exploded perspective view of the pet sheet 100 shown in FIG. 1.
FIG. 3 is a sectional view taken along line A-A in FIG. 1 and showing a sectional structure of the pet sheet 100.
FIG. 4 shows a sectional structure of a covering sheet 130 shown in FIG. 3.
FIG. 5 is a plan view showing specimens T1, T2, T3, T4 to be used for measurement of tear strength.
FIG. 6 shows tear strength of the specimens T1, T2, T3, T4 shown in FIG. 5, the covering sheet 130 (T5) and the bonded sheet 150 (T6).
FIG. 7 is a perspective view showing the pet sheet 100 of FIG. 1 for illustrating a dropping test of artificial urine.
FIG. 8 shows spread lengths d1, d2 and spread area S of the artificial urine in FIG. 7 after a lapse of 13 seconds from start of urine dropping.
FIG. 9 shows the spread lengths d1, d2 and the spread area S of the artificial urine in FIG. 7 after a lapse of one minute from start of urine dropping.
FIG. 10 shows the spread lengths d1, d2 and the spread area S of the artificial urine in FIG. 7 after a lapse of 10 minutes from start of urine dropping.

### DETAILED DESCRIPTION OF THE INVENTION

A pet sheet 100 as one embodiment of a "pet sheet" according to the invention is now explained with reference to the drawings. The "pet" here widely includes vertebrates (mammals, reptiles, birds and amphibians) and invertebrates, and the pet sheet 100 is suitably used for kinds of mammal having sharp claws and teeth, such as cats, dogs, rabbits and hamsters.

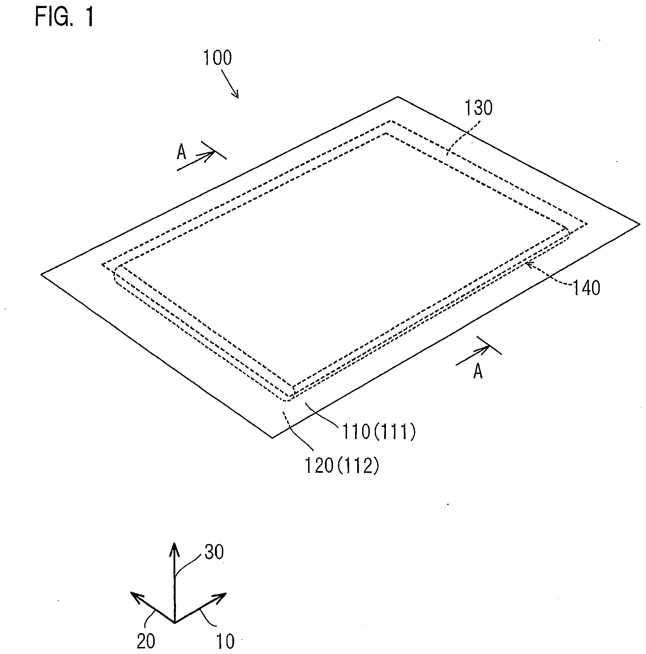

The pet sheet 100 shown in FIG. 1 is a flat sheet having a predetermined thickness and includes a top sheet 110, a back sheet 120, a covering sheet 130 and an absorber 140. The pet sheet 100 preferably has a rectangular or square shape, but it may have a circular, elliptical or polygonal shape.

In FIG. 1 and other drawings, the width direction, the length direction and the normal direction of the pet sheet 100 correspond to a first direction 10, a second direction 20 perpendicular to the first direction 10 and a third direction 30 perpendicular to the first and second directions 10, 20, respectively.

The pet sheet 100 has a pet use mode in which the pet sheet is unfolded flat and used. In this use mode, an outer surface of the top sheet 110 has a planar structure serving both as an excrement receiving surface for receiving excrement of pets in non-contact with an excreting part of the pet from which urine is excreted, and as a pet walking surface on which the pet can walk. This use mode includes a mode in which the pet sheet is directly put, for example, on floor and a mode in which the pet sheet is attached to a holder and put, for example, on floor.

Preferably, the pet sheet 100 further has a storage mode. In this mode, a plurality of flat pet sheets are each folded or rolled in predetermined shape and can be stored in one container for sale, display, transportation, etc.

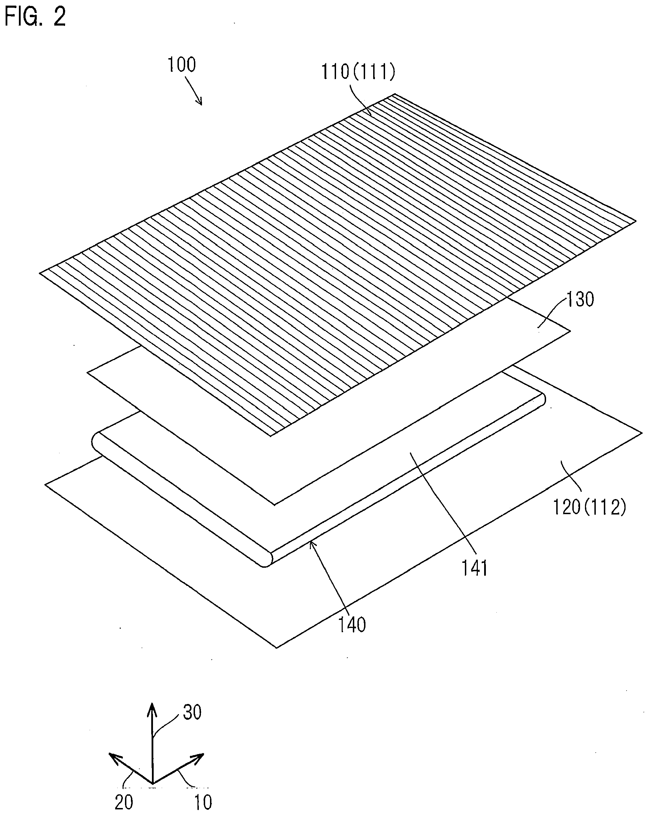

As shown in FIG. 2, the top sheet 110 and the back sheet 120 are rectangular sheets having about the same dimensions, and have substantially the same shape as the external shape of the pet sheet 100. The top sheet 110 forms a receiving surface for receiving excrement excreted from pets and formed as a liquid-permeable sheet for penetration of liquid such as urine. Preferably, the top sheet 110 is formed by thermoplastic nonwoven fabric. In this case, the whole or part of the top sheet 110 can be formed of thermoplastic nonwoven fabric. The back sheet 120 is arranged on the side of the covering sheet 130 and the absorber 140 opposite from the top sheet 110 and formed as a liquid-impermeable or water-repellent sheet for blocking or preventing penetration of liquid such as urine. Preferably, the back sheet 120 is formed by a resin film sheet. It is essential for the back sheet 120 to be liquid-impermeable or water-repellent, and the back sheet 120 can be formed by using a film of polyethylene, polypropylene, polyethylene terephthalate. For example, it can be formed of a polyethylene film having a basis weight of 17 g/m². Further, in consideration of the flexibility, the back sheet 120 can be formed by a nonwoven fabric to which a water repellent is applied. The "g/m²" here represents a gram per square meter which measures basis weight.

The top sheet 110 and the back sheet 120 are slightly larger than the covering sheet 130 and the absorber 140, and a rim 111 of the top sheet 110 and a rim 112 of the back sheet 120 are aligned one on the other and bonded together via a bonding layer 113. Thus, the top sheet 110 and the back sheet 120 cover over the covering sheet 130 and the absorber 140. This bonding can be typically made by using a hot-melt adhesive, a heat sealer or an ultrasonic sealer. The top sheet 110 and the back sheet 120 here are features that correspond to the "top sheet" and the "back sheet", respectively, according to this invention.

The covering sheet 130 covers an upper surface 141 (facing the top sheet 110) of the absorber 140. Specifically, the covering sheet 130 is disposed between the top sheet 110 and the absorber 140 in order to cover the absorber 140. The covering sheet 130 is formed of thermoplastic nonwoven fabric. In this case, the whole or part of the covering sheet 130 can be formed of thermoplastic nonwoven fabric. The covering sheet 130 here is a feature that corresponds to the "covering sheet" according to this invention.

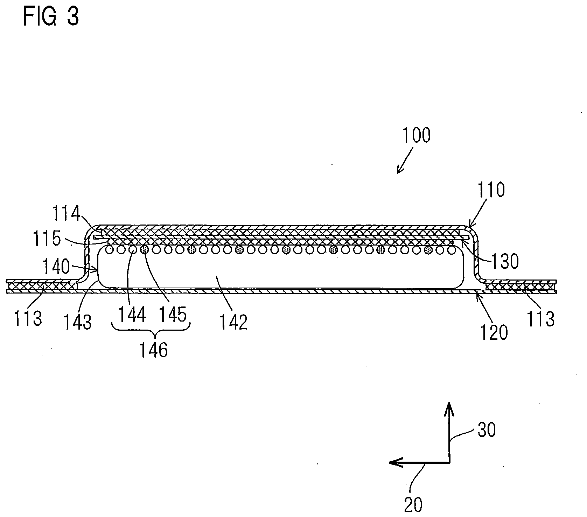

As shown in FIG. 3, the absorber 140 has a predetermined thickness and includes an absorber core layer 142, carrier tissue 143 surrounding the absorber core layer 142, and a dispersed layer 146. The absorber core layer 142 is typically formed of blended polymer which is a blend of high-absorbent polymers (also referred to as "SAP"), and a pulp (e.g. flat pulp layered to have a basis weight of 60 g/m²). The carrier tissue 143 is typically formed of tissue (e.g. tissue of 14 g/m²) of softwood pulp. The dispersed layer 146 is a layered part dispersed in a surface of the carrier tissue 143 facing the covering sheet 130, and in this layer, typically, polymer particles 144 having high-absorbent polymers and fragrance particles 145 encapsulating fragrance are dispersed. Further, the absorber 140 and the back sheet 120 may be bonded as necessary, for example, by a hot-melt adhesive. The absorber core layer 142 may be formed by using water-absorbing porous material such as sponge in place of high-absorbent polymer. The absorber 140 here is a feature that corresponds to the "absorber" according to this invention.

In designing a pet sheet suitable for dogs, cats or other pets having sharp claws and teeth (sharp parts), it is highly desired to prevent the top sheet 110 and thus the covering sheet 130 for the absorber 140 from being torn by the pets and thus prevent the absorber 140 from being scattered. For example, the covering sheet 130 may be torn by various tearing actions of a pet, such as scratching with the claws along an extending surface of the covering sheet 130, and digging of the claws or biting with the teeth in a direction transverse to the extending surface of the covering sheet 130. Further, in the pet use mode as described above, a pet frequently moves actively on the top sheet 110, so that the top sheet 110 may be torn particularly by contact of the pet's sharp part and the outer surface of the top sheet 110 and thus the covering sheet 130 may be torn. Therefore, after thorough study of the construction of pet sheets of this type, inventors provide the pet sheet 100 of this embodiment. Features of the pet sheet 100 are now specifically explained.

### <Construction of the top sheet>

The above-described top sheet 110 is formed of thermoplastic nonwoven fabric having a plurality of regularly arranged pores (also referred to as effective air-through nonwoven fabric formed of hydrophilic olefin polyethylene fibers). Preferably, the top sheet 110 has a basis weight of 10 to 30 g/m² and a tear strength of 2 to 10 N. This tear strength (also referred to as "tearing load") is defined as tensile load required to tear a specimen having a cut and expressed in newton (N). The tear strength is described below in more detail along with a tear test. By providing the top sheet 110 with a predetermine tear strength, the top sheet 110 itself can be prevented from being torn before the covering sheet 130. Further, the manufacturing cost of the top sheet 110 can be reduced by providing the top sheet 110 having a basis weight within a predetermined range.

### <Construction of the covering sheet>

The above-described covering sheet 130 is formed of thermoplastic nonwoven fabric, including meltblow nonwoven fabric. By using relatively finely-woven meltblow nonwoven fabric for the covering sheet 130, absorbent polymers or other similar materials having a low particle size and forming the absorber 140 can be prevented from passing through the covering sheet 130. For this purpose, more preferably, the meltblow nonwoven fabric has an air permeability exceeding 200 cc/cm² · sec. The "cc/cm² · sec" here represents volume or cubic centimeter of air passing through the specimen per one square centimeter in one second and measures air permeability.

The covering sheet 130 having the meltblow nonwoven fabric has a three-layer structure in which spun-bond nonwoven fabric is overlaid on the both sides of the meltblow nonwoven fabric sheet. The spun-bond nonwoven fabric is formed as a thermoplastic nonwoven fabric (thermoplastic resin nonwoven fabric) manufactured by a well-known spun-bonding method in which thermoplastic polymer is melted and then formed into a sheet while being spun into continuous filaments. The meltblow nonwoven fabric is formed as a thermoplastic nonwoven fabric (thermoplastic resin nonwoven fabric) manufactured by a well-known meltblow method in which high-temperature air is further blown onto the filaments manufactured by the spun-bonding method and the filaments are dispersed and layered so as to form a sheet of finer fabric. A hot-melt adhesive is formed as a thermoplastic adhesive which is melted into liquid by heating and solidified by cooling so that bonding is achieved.

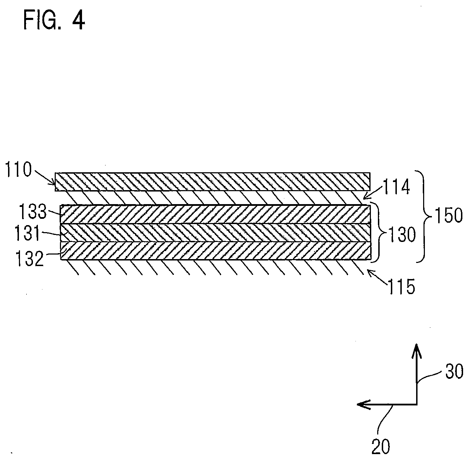

The specific sectional structure of the covering sheet 130 is shown in FIG. 4. The covering sheet 130 has a three-layer structure having spun-bond nonwoven fabric sheets 132, 133 overlaid on the opposite sides of the meltblow nonwoven fabric sheet 131. This three-layer nonwoven fabric sheet is also referred to as an "SMS nonwoven fabric sheet". Thus, in order to manufacture the covering sheet 130, the spun-bond nonwoven fabric layer is formed by a known spun-bond method on each side of the meltblow nonwoven fabric sheet prepared in advance by a known meltblow method. In this case, by providing the spun-bond nonwoven fabric sheet having a relatively long fiber length on the sheet surface, the surface roughness of the covering sheet 130 can be reduced so that the nice and soft covering sheet 130 can be obtained.

The covering sheet 130 is bonded to the top sheet 110 via a bonding layer 114 formed by a hot-melt adhesive. Further, the covering sheet 130 is bonded to the absorber 140 via a bonding layer 115 formed by treating a hot-melt adhesive with water spray. The bonding strength between the covering sheet 130 and the top sheet 110 or the absorber 140 can be increased by using the hot-melt adhesive. The top sheet 110 and the covering sheet 130 are integrally formed into a bonded sheet 150 via the bonding layer 114. In this case, in order to secure a liquid penetrant passage from the top sheet 110 to the absorber 140, preferably, the hot-melt adhesive is applied in a discontinuous pattern such as a spiral, lattice-like, striped or dotted pattern. The bonding layer 114 and the bonded sheet 150 are features that correspond to the "bonding layer" and the "bonded sheet", respectively, according to this invention.

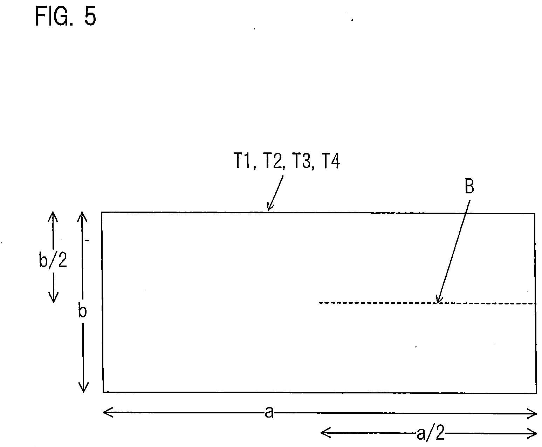

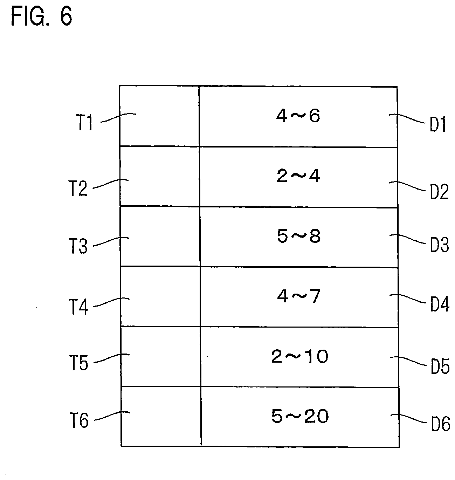

The covering sheet 130 and the bonded sheet 150 having the top sheet 110 and the covering sheet 130 preferably have their respective tear strengths. The tear strengths are explained with reference to FIGS. 5 and 6.

The tear strengths of the covering sheet 130 and the bonded sheet 150 are set based on a tear test conducted by using following specimens (see FIG. 5) and test method.

### <Specimens >

As shown in FIG. 5, four kinds of specimens T1, T2, T3, T4 are prepared. Each of the specimens has a rectangular shape having a long side of a length a of 150 mm and a short side of a length b of 40 mm and has a cut B (shown by a broken line in FIG. 5) formed with scissors or the like. The cut B extends parallel to the long side from the middle of the short side. In this embodiment, the cut B is made into a length of 75 mm (= a/2) at a distance of 40 mm (= b/2) from the long side. The specimens T1, T2, T3, T4 are distinguished as described below. The "mm" represents a millimeter which measures length.

Each of the specimens T1, T2 is formed by cutting the covering sheet 130 into a piece of 150 by 40 mm and making the cut B in it. In the specimen T1, the long side extends in the MD (machine direction) and the short side extends in the CD (cross direction). In the specimen T2, the long side extends in the CD and the short side extends in the MD.

Generally, nonwoven fabric has a lengthwise direction and a transverse direction in relation to the manufacturing process. The MD (machine direction) corresponds to the lengthwise direction of the nonwoven fabric and is defined as a direction of flow of the nonwoven fabric in the process of manufacturing the nonwoven fabric. The CD (cross direction) corresponds to the transverse direction of the nonwoven fabric and is defined as a direction transverse to the direction of flow of the nonwoven fabric in the process of manufacturing the nonwoven fabric. The above described MD and CD correspond to the first direction 10 and the second direction 20 in FIG. 1, respectively.

Each of the specimens T3, T4 is formed by the top sheet 110 and the covering sheet 130. In this case, a hot-melt adhesive of 3 g/m² is disposed between a cut piece formed by appropriately cutting the top sheet 110 and a cut piece formed by appropriately cutting the covering sheet 130. In this state, a predetermined cylinder (e.g. a cylinder having a diameter of 60 mm, a height of 85 mm and a weight of 1.9 kg) is rolled and pressed against the cut pieces. The "kg" here represents kilogram which measures weight. The bonded sheet of cut pieces is allowed to stand for 24 hours and cured. Thereafter, it is cut into 150 by 40 mm and the cut B is made in it, so that the specimens T3, T4 simulating the bonded sheet 150 are obtained. In the specimen T3, the long side extends in the MD and the short side extends in the CD. In the specimen T4, the long side extends in the CD and the short side extends in the MD.

### <Test method>

An end of each specimen opened by the cut B is held on the both sides of the cut with a spacing of 100 mm and pulled at a speed of 200 mm/min along the long side (in the horizontal direction in FIG. 5) until the specimen is completely separated into two pieces. The "mm/min" here is a measure of distance (millimeter) per minute. This pulling is performed five times for each specimen, and an average load required for this pulling is defined as tear strength for each specimen. Further, the tear strength of the covering sheet 130 is set based on the tear strengths of the specimens T1, T2, and the tear strength of the bonded sheet 150 is set based on the tear strengths of the specimens T3, T4.

As shown in FIG. 6, the specimen T1 has a tear strength D1 of 4 to 6 N, the specimen T2 has a tear strength D2 of 2 to 4 N, the specimen T3 has a tear strength D3 of 5 to 8 N, and the specimen T4 has a tear strength D4 of 4 to 7 N. Based on the tear strengths D1, D2, D3, D4, tear strength D5 of the covering sheet 130 designated by T5 in FIG. 6 is set in the range of 2 to 10 N. Further, tear strength D6 of the bonded sheet 150 designated by T6 in FIG. 6 is set in the range of 5 to 20 N.

The lowest standard of the tear strength T5 is preferably set to either one of the minimum value of the tear strength D1 and the minimum value of the tear strength D2, or the average of these minimum values. Similarly, the lowest standard of the tear strength T6 is preferably set to either one of the minimum value of the tear strength D3 and the minimum value of the tear strength D4, or the average of these minimum values.

Further, the highest standard of the tear strength T5 is preferably set to the tear strength of the covering sheet which can be manufactured with an increased basis weight within a desired range of the manufacturing cost, with reference to the maximum values of the tear strengths D1, D2. Similarly, the highest standard of the tear strength T6 is preferably set to the tear strength of the bonded sheet which can be manufactured with an increased basis weight within a desired range of the manufacturing cost, with reference to the maximum values of the tear strengths D3, D4.

With the above-described construction, by provision of the covering sheet 130 having a tear strength exceeding 2 N, the absorber 140 can be protected by the covering sheet 130 having the predetermined tear strength even if the top sheet 110 is torn. Therefore, the covering sheet 130 is designed to include a tear preventing structure (corresponding to the "tear preventing structure" according to this invention) for preventing the covering sheet 130 from being torn by pets. Thus, the covering sheet 130 is prevented from being torn by sharp parts of pets. Therefore, covering of the absorber 140 by the covering sheet 130 is further secured, so that scattering of the absorber 140 can be prevented. Further, the covering sheet 130 itself has a tear preventing structure, so that an additional member for preventing the covering sheet 130 from being torn is not needed in addition to the covering sheet 130 and the covering sheet 130 can be used as is. For reduction of the manufacturing cost, preferably, the upper limit of the tear strength of the covering sheet 130 is set to 10 N.

When the top sheet 110 has the tear strength of 2 to 10 N as described above, the top sheet 110 includes a different tear preventing structure from the covering sheet 130. In this case, the top sheet 110 serves to prevent tear of the top sheet 110 and to protect the covering sheet 130.

The tear strength of the covering sheet 130 is preferably set by appropriately selecting the material or basis weight of the nonwoven fabric. The covering sheet 130 can be formed to have the basis weight, for example, of 10 to 20 g/m². In this manner, the manufacturing cost of the covering sheet 130 having a desired tear strength can be reduced.

Further, in the bonded sheet 150, the top sheet 110 is integrally formed with the covering sheet 130 having at least the above-described tear preventing structure, and the whole bonded sheet 150 can counteract tearing actions of pets. Particularly with the tear strength of the bonded sheet 150 exceeding 5 N, the tear resistance of the bonded sheet 150 can be further increased.

The pet sheet 100 having the above-described construction provides further effects as described below by using a three-layer SMS nonwoven fabric sheet as the covering sheet 130. It can prevent urine from spreading out along the extending surface of the covering sheet 130 before absorbed into the absorber 140 through the top sheet 110. Pets like dogs usually avoid urinating on an area which has been used once. Therefore, particularly by preventing the above-described spread of urine, the largest possible urination area can be secured on the sheet. This spread preventing part for preventing spread of urine is formed by the covering sheet 130.

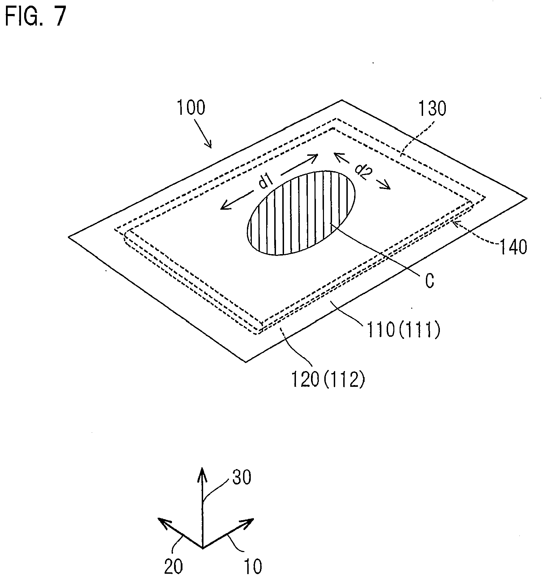

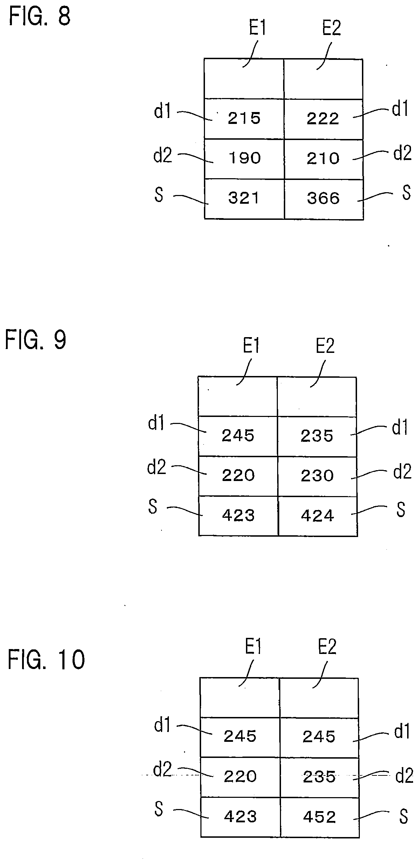

In order to confirm the efficacy of preventing spread of urine, inventors conducted dropping tests of artificial urine. In this test, about 80 cc of artificial urine which is prepared in advance is dropped from 10 mm above the pet sheet for 13 seconds, and change of the area of spread of the urine is measured over time. The "cc" here represents a cubic centimeter which measures volume. The extent of the spread region is determined by the balance between the spreading speed of urine spreading along the extending surfaces of the top sheet 110 and the covering sheet 130 and the speed of absorbing urine into the absorber 140. As shown in FIG. 7, in the dropping test, a spread region C can be defined by a spread length d1 (mm) in the MD, a spread length d2 (mm) in the CD and a spread area S (cm²). The spread area S is calculated by (d1/20) × (d2/20) × 3.14. The "cm²" represents a square centimeter which measures area. The change of the extent of the spread region C over time is shown in FIGS. 8 to 10.

In FIGS. 8 to 10, the covering sheet 130 is formed by the above-described SMS nonwoven fabric sheet in an embodiment E1, while it is formed by a tissue material having the basis weight of 15 g/cm² in a comparative example E2. In these drawings, in the embodiment E1 and the comparative example E2, values in columns d1 correspond to the spread length d1 (mm) in FIG. 7, values in columns d2 correspond to the spread length d2 (mm) in FIG. 7, and values in columns S correspond to the spread area S (cm²) in FIG. 7.

From the results of the above-described test, it is found that after a lapse of 13 seconds from start of the urine dropping, the spread region C stops spreading in the embodiment E1 while it continues spreading over time in the comparative example E2. From the test results, the above-described covering sheet 130 formed by the SMS nonwoven fabric sheet is considered as having a function of preventing spread of urine.

### (Other Embodiments)

The invention is not limited to the above-described embodiment, but rather, may be added to, changed, replaced with alternatives or otherwise modified, within the scope of the appended claims. For example, the following provisions can be made in application of this embodiment.

In the above-described embodiment, the pet sheet 110 is described as having the bonded sheet 150 formed by bonding the top sheet 110 and the covering sheet 130, but in this invention, it may be constructed such that the top sheet 110 and the covering sheet 130 are not bonded. In the former case, the whole bonded sheet 150 can counteract tearing actions of pets, and in the latter case, when the top sheet is damaged, the covering sheet 130 counteracts tearing actions of pets.

According to the invention, the covering sheet 130 has a three-layer structure having the spun-bond nonwoven fabric sheets 132, 133 overlaid on the both sides of the meltblow nonwoven fabric sheet 131.

### Description of Numerals

100 pet sheet
110 top sheet
111, 112 rim
113, 114,115 bonding layer
120 back sheet
130 covering sheet
131 meltblow nonwoven fabric sheet
132, 133 spun-bond nonwoven fabric sheet
140 absorber
141 upper surface
142 absorber core layer
143 carrier tissue
144 polymer particle
145 fragrance particle
146 dispersed layer
150 bonded sheet

## Claims

1. A pet sheet (100) for receiving excrement of a pet comprising:
a top sheet (110) having a nonwoven fabric forming region,
a back sheet (120) overlaid on the top sheet (110),
an absorber (140) provided between the top sheet (110) and the back sheet (120),
a covering sheet (130) having a thermoplastic nonwoven fabric forming region and provided between the top sheet (110) and the absorber (140) to cover the absorber (140),
wherein the covering sheet (130) includes meltblow nonwoven fabric and has a three-layer structure having spun-bond nonwoven fabric sheets (132, 133) overlaid on both sides of the meltblow nonwoven fabric sheet (131), and a tear preventing structure provided in the covering sheet (130) to prevent the covering sheet (130) from being torn by the pet, and
wherein the covering sheet (130) forms a spread preventing part for preventing spread of urine.

2. The pet sheet as defined in claim 1, wherein the tear preventing structure prevents the covering sheet (130) from being torn by a sharp part of the pet when the sharp part moves relative to the covering sheet (130) in contact with the top sheet (110).

3. The pet sheet as defined in claim 1 comprising a pet use mode in which the pet sheet (100) is unfolded flat and used, wherein, in the pet use mode, an outer surface of the top sheet (110) has a planar structure serving both as an excrement receiving surface for receiving excrement excreted from an excreting part of the pet in non-contact with the excreting part and as a pet walking surface on which the pet can walk.

4. The pet sheet as defined in claim 1, wherein the tear preventing structure is constructed such that the covering sheet (130) has a tear strength of 2 to 10 N.

5. The pet sheet as defined in claim 1, wherein the covering sheet (130) has a basis weight of 8 to 20 g/m².

6. The pet sheet as defined in claim 1, wherein the top sheet (110) comprises a thermoplastic nonwoven fabric sheet having a basis weight of 8 to 40 g/m² and a tear strength of 2 to 10 N.

7. The pet sheet as defined in claim 1, wherein the top sheet (110) and the covering sheet (130) are bonded together via a bonding layer (114) and form a bonded sheet (150) such that the bonded sheet (150) includes the tear preventing structure.

8. The pet sheet as defined in claim 7, wherein the top sheet (110) comprises a thermoplastic nonwoven fabric sheet having a basis weight of 8 to 40 g/m² and a tear strength of 2 to 10 N, the covering sheet (130) comprises a nonwoven fabric sheet which has a three-layer structure having spun-bond nonwoven fabric sheets (132, 133) overlaid on both sides of the meltblow nonwoven fabric sheet (131) and has a basis weight of 8 to 20 g/m², and the bonded sheet (150) has a tear strength of 5 to 20 N.

## Patentansprüche

1. Eine Haustierlage (100) zum Aufnehmen von Exkrementen eines Haustieres, umfassend:
eine obere Lage (110) mit einem Faservliesstoffausbildungsbereich,
eine untere Lage (120), die auf der oberen Lage (110) überlagert ist,
einen Absorber (140), der zwischen der oberen Lage (110) und der unteren Lage (120) vorgesehen ist,
eine Decklage (130) mit einem thermoplastischen Faservliesstoffausbildungsbereich und die zwischen der Decklage (110) und dem Absorber (140) zum Abdecken des Absorbers (140) vorgesehen ist, wobei
die DecHage (130) einen schmelzgeblasenen Faservliesstoff umfasst und eine dreischichtige Struktur mit gesponnenen Faservliesstofflagen (132, 133) aufweist, die auf beiden Seiten der schmelzgeblasenen Faservliesstofflage (131) überlagert sind, und eine reißfeste Struktur, die in der Decklage (130) vorgesehen ist, um zu verhindern, dass die Decklage (130) von dem Haustier zerrissen wird, und
wobei die Decklage (130) einen Ausbreitungsverhinderungsteil zum Verhindern der Ausbreitung von Urin ausbildet.

2. Haustierlage gemäß Anspruch 1, wobei die reißfeste Struktur verhindert, dass die Decklage (130) von einem scharfen Teil des Haustieres zerrissen wird, wenn sich der scharfe Teil relativ zu der Decklage (130) in Kontakt mit der oberen Lage (110) bewegt.

3. Haustierlage gemäß Anspruch 1, umfassend einen Haustiergebrauchsmodus, in dem die Haustierlage (130) flach aufgefaltet ist und in Benutzung ist, wobei im Haustiergebrauchsmodus eine äußere Oberfläche der oberen Lage (110) eine planare Struktur aufweist, die sowohl als Exkrementaufnahmeoberfläche zum Aufnehmen von Exkrementen dient, die von einem ausscheidenden Teil des Haustieres kontaktlos mit dem ausscheidenden Teil ausgeschieden werden, als auch als Haustierlaufoberfläche, auf der das Haustier laufen kann.

4. Haustierlage gemäß Anspruch 1, wobei die reißfeste Struktur derart ausgebildet ist, dass die Decklage (130) eine Reißfestigkeit von 2 bis 10 N aufweist.

5. Haustierlage gemäß Anspruch 1, wobei die Decklage (130) ein Flächengewicht von 8 bis 20 g/m² aufweist.

6. Haustierlage gemäß Anspruch 1, wobei die obere Lage (110) eine thermoplastische Faservliesstofflage mit einem Flächengewicht von 8 bis 40 g/m² und einer Reißfestigkeit von 2 bis 10 N umfasst.

7. Haustierlage gemäß Anspruch 1, wobei die obere Lage (110) und die Decklage (130) über eine Klebeschicht (114) miteinander verbunden sind und eine Klebelage (150) derart ausbilden, dass die Klebelage (150) die reißfeste Struktur umfasst.

8. Haustierlage gemäß Anspruch 7, wobei die obere Lage (110) eine thermoplastische Faservliesstofflage mit einem Flächengewicht von 8 bis 40 g/m² und einer Reißfestigkeit von 2 bis 10 N umfasst, wobei die Decklage (130) eine Faservliesstofflage umfasst, das eine dreischichtige Struktur mit gesponnenen Faservliesstofflagen (132, 133) aufweist, die auf beiden Seiten der schmelzgeblasenen Faservliesstofflage (131) überlagert sind und ein Flächengewicht von 8 bis 20 g/m² aufweist, und die Klebel0age (150) eine Reißfestigkeit von 5 bis 20 N aufweist.

## Revendications

1. Feuille pour animal domestique (100) destinée à recevoir les excréments d'un animal domestique comprenant :
une feuille supérieure (110) ayant une région de formation de tissu non tissé,
une feuille arrière (120) superposée sur la feuille supérieure (110),
un absorbeur (140) fourni entre la feuille supérieure (110) et la feuille arrière (120),
une feuille de couverture (130) ayant une région de formation de tissu non tissé thermoplastique et fournie entre la feuille supérieure (110) et l'absorbeur (140) pour recouvrir l'absorbeur (140),
dans laquelle la feuille de couverture (130) comprend un tissu non tissé fondu-soufflé et présente une structure à trois couches ayant des feuilles de tissu non tissé lié au filage (132, 133) superposées sur les deux faces de la feuille de tissu non tissé fondu-soufflé (131), et
une structure anti-déchirure fournie dans la feuille de couverture (130) pour empêcher que la feuille de couverture (130) ne soit déchirée par l'animal domestique, et
dans laquelle la feuille de couverture (130) forme une partie anti-propagation pour empêcher la propagation de l'urine.

2. Feuille pour animal domestique selon la revendication 1, dans laquelle la structure anti-déchirure empêche la feuille de couverture (130) d'être déchirée par une partie tranchante de l'animal domestique lorsque la partie tranchante se déplace par rapport à la feuille de couverture (130) en contact avec la feuille supérieure (110).

3. Feuille pour animal domestique selon la revendication 1, comprenant un mode d'emploi pour animal domestique, dans laquelle la feuille pour animal domestique (100) est dépliée à plat et utilisée, dans laquelle, dans le mode d'emploi pour animal domestique, une surface extérieure de la feuille supérieure (110) a une structure plane servant à la fois de surface de réception des excréments pour recevoir les excréments excrétés d'une partie d'excrétion de l'animal domestique qui n'est pas en contact avec la partie d'excrétion et de surface de marche pour animal domestique sur laquelle l'animal domestique peut marcher.

4. Feuille pour animal domestique selon la revendication 1, dans laquelle la structure anti-déchirure est construite de sorte que la feuille de couverture (130) présente une résistance à la déchirure de 2 à 10 N.

5. Feuille pour animal domestique selon la revendication 1, dans laquelle la feuille de couverture (130) a un grammage de 8 à 20 g/m².

6. Feuille pour animal domestique selon la revendication 1, dans laquelle la feuille supérieure (110) comprend une feuille de tissu non tissé thermoplastique ayant un grammage de 8 à 40 g/m² et une résistance à la déchirure de 2 à 10 N.

7. Feuille pour animal domestique selon la revendication 1, dans laquelle la feuille supérieure (110) et la feuille de couverture (130) sont liées ensemble par l'intermédiaire d'une couche de liaison (114) et forment une feuille liée (150) de sorte que la feuille liée (150) comprend la structure anti-déchirure.

8. Feuille pour animal domestique selon la revendication 7, dans laquelle la feuille supérieure (110), comprend une feuille de tissu non tissé thermoplastique ayant un grammage de 8 à 40 g/m² et une résistance à la déchirure de 2 à 10 N, la feuille de couverture (130) comprend une feuille de tissu non tissé ayant une structure à trois couches comprenant des feuilles de tissu non tissé lié au filage (132, 133) superposées sur les deux faces de la feuille de tissu non tissé fondu-soufflé (131) et ayant un grammage de 8 à 20 g/m², et la feuille liée (150) a une résistance à la déchirure de 5 à 20 N.
